# EUROPEAN PATENT APPLICATION

(11) **EP 3 550 118 A1**
(43) Date of publication of application: **09.10.2019**
(21) Application number: 19167149.4
(22) Date of filing: 03.04.2019
(51) Int. Cl.: F01N 3/36, F02M 51/06, F02M 61/16

(54) **SWIRLING PINTLE INJECTORS**

(30) Priority: 04.04.2018 US 201815944875
(71) Applicant: Delavan, Inc., West Des Moines, IA 50265 (US)
(72) Inventor: TIBBS, Andy W., Earlham, IA 50072 (US); UMMEL, Douglas L., West Des Moines, IA 50266 (US); SHORT, John Earl, Norwalk, IA (US)
(74) Representative: Dehns

(57) **Abstract**

An injector includes a housing (102) including a fluid passage (104) extending from an inlet (106) of the housing to an outlet end (108) of the housing. An actuator (110) is mounted within the housing. A pintle (112) extends along a longitudinal axis from an actuator end to a pintle head. The actuator end of the pintle is operatively connected to the actuator for actuation along the longitudinal axis. A tip member (122) is mounted to the outlet end of the housing. The tip member includes an outlet orifice (124) and a pintle seat (126). In a seated position of the pintle, the pintle head blocks flow to the outlet orifice. In an open position of the pintle, the pintle head allows flow. The pintle head includes a swirl passage (132) therein, wherein the swirl passage is angled tangential relative to the longitudinal axis to induce swirl on flow passing between the pintle head and the pintle seat.

## Description

### BACKGROUND OF THE INVENTION

### 1. Field of the Invention

The present disclosure relates to injectors, and more particularly to injectors for urea injection in exhaust gas treatment, for example.

### 2. Description of Related Art

Conventional exhaust gas treatment systems, such as for diesel exhaust, utilize injectors for various functions in the treatment process including injecting urea or other reactants to neutralize pollutants, and for burners which pyrolyticaly clean filters and catalysts. Dispersion of droplets is a limitation in conventional systems, which can lead to fouled catalysts, for example. Residual fluid collecting on injector tips due to drooling after shutdown forms deposits and plugs injectors.

The conventional techniques have been considered satisfactory for their intended purpose. However, there is an ever present need for improved injection. This disclosure provides a solution for this need.

### SUMMARY OF THE INVENTION

An injector includes a housing including a fluid passage extending from an inlet of the housing to an outlet end of the housing. An actuator is mounted to the housing. A pintle extends along a longitudinal axis from an actuator end to a pintle head. The actuator end of the pintle is operatively connected to the actuator for actuation of the pintle along the longitudinal axis. A tip member is mounted to the outlet end of the housing. The tip member includes an outlet orifice and a pintle seat. In a seated position of the pintle, the pintle head seals against the pintle seat blocking flow to the outlet orifice. In an open position of the pintle, the pintle head is spaced apart from the pintle seat, opening a flow path through the outlet orifice. The pintle head includes a swirl passage therein, wherein the swirl passage is angled tangential relative to the longitudinal axis to induce swirl on flow passing between the pintle head and the pintle seat in the open position.

The swirl passage can define an open channel on an exterior surface of the pintle head. The open channel can define a flat bottom surface and two opposed sidewalls extending from the flat bottom surface. The swirl passage can define an internal passage through an interior portion of the pintle head, from an inlet on an exterior surface of the pintle head, to an outlet on the exterior surface of the pintle head.

The pintle can include a neck separating a shoulder of the pintle from the pintle head, wherein the neck is narrower than the shoulder and the pintle head. The pintle head can include a widening surface extending away from the neck, a cylindrical surface extending from the widening surface, and a narrowing surface that extends from the cylindrical surface to a tip of the pintle. The swirl passage can have an outlet end defined in the narrowing surface of the pintle head. The swirl passage can have an inlet in the widening surface of the pintle head. The tip member can include a cylindrical interior surface opposed to the cylindrical surface of the pintle head so that in the seated position, fluid in the swirl passage is confined in the swirl passage but in fluid communication with fluid upstream of the cylindrical interior surface. A conical interior surface of the pintle seat can block the swirl passage in the seated position.

The injector can include at least one additional swirl passage defined in the pintle head, wherein the swirl passages are circumferentially spaced apart evenly around the pintle head. The actuator end of the pintle can include a magnetic armature, wherein the actuator includes a solenoid magnetically coupled to the armature, and wherein the solenoid and armature are configured so that alternating a magnetic field in the solenoid actuates the pintle to reciprocate at a predetermined frequency between the seated position and the open position. The pintle can include an internal inlet passage extending partially therethrough, terminating at a set of one or more radial ports for flow from the internal passage, around the pintle head, to the tip member.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a cross-sectional elevation view of an exemplary embodiment of an injector constructed in accordance with the present disclosure, showing the pintle, the actuator, and the tip member;
Fig. 2 is a cross-sectional elevation view of a portion of the injector of Fig. 1, showing the pintle and tip member in the seated position blocking flow;
Fig. 3 is a cross-sectional elevation view of a portion of the injector of Fig. 1, showing the pintle and tip member in the open position allowing flow;
Fig. 4 is a perspective view of a portion of the pintle of Fig. 1, showing the open channels of the swirl slots; and
Fig. 5 is a perspective view of another exemplary embodiment of a pintle, showing swirl passages that define internal passages through the pintle head.

### DETAILED DESCRIPTION OF THE PREFERRED EMBODIMENTS

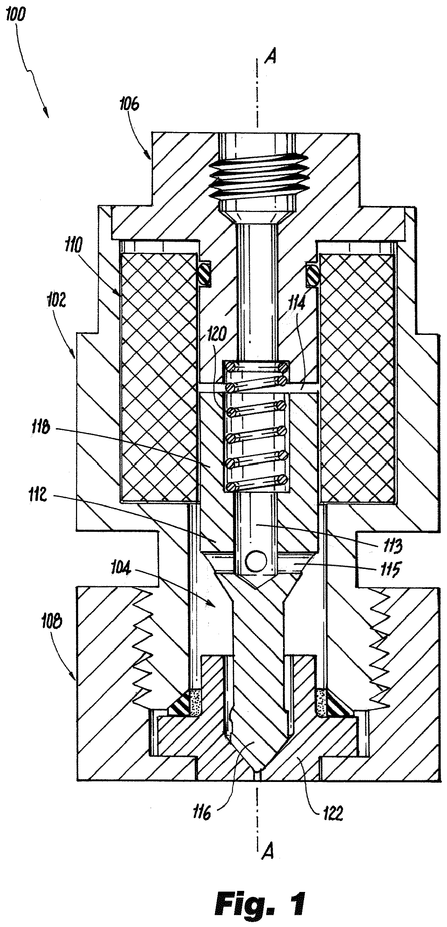

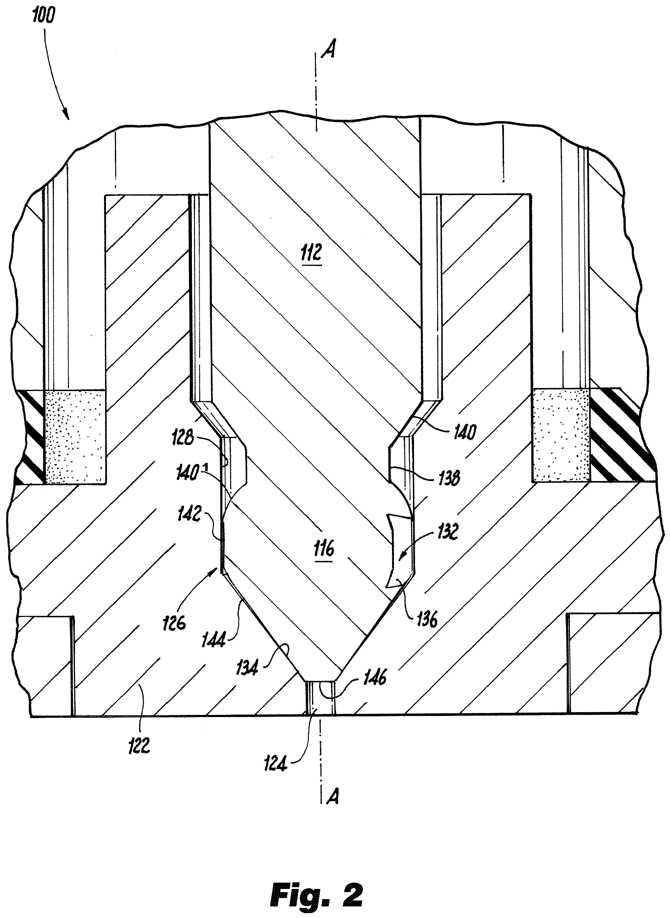

Reference will now be made to the drawings wherein like reference numerals identify similar structural features or aspects of the subject disclosure. For purposes of explanation and illustration, and not limitation, a partial view of an exemplary embodiment of an injector in accordance with the disclosure is shown in Fig. 1 and is designated generally by reference character 100. Other embodiments of injectors in accordance with the disclosure, or aspects thereof, are provided in Figs. 2-5, as will be described. The systems and methods described herein can be used for spraying reactants such as diesel exhaust fluid (DEF) for selective catalytic reduction (SCR), for example.

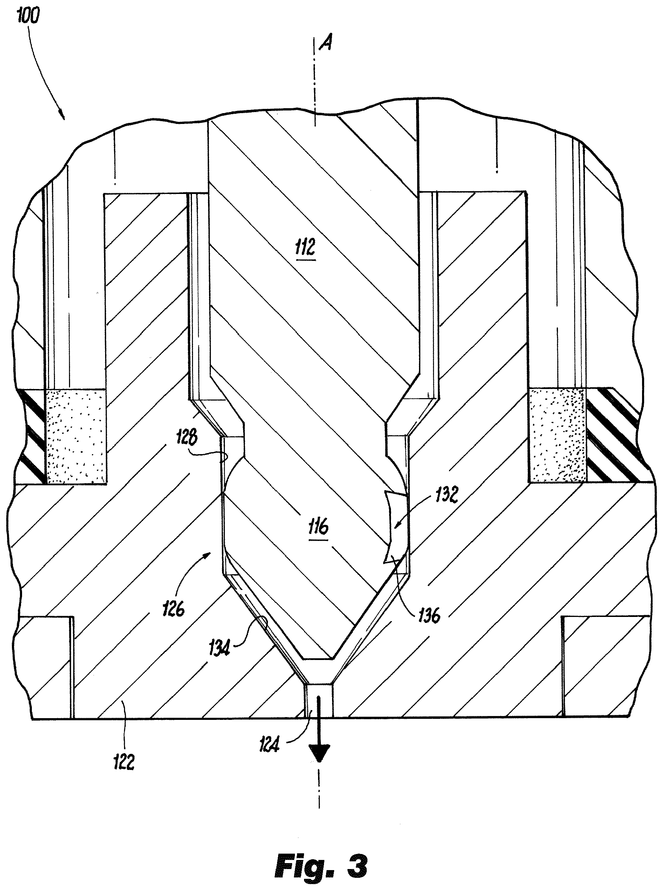

The injector 100 includes a housing 102 including a fluid passage 104 extending from an inlet 106 of the housing 102 to an outlet end 108 of the housing 102. An actuator 110 is mounted to the housing 102. A pintle 112 extends along a longitudinal axis A from an actuator end 114 to a pintle head 116. The actuator end 114 of the pintle is operatively connected to the actuator 110 for actuation of the pintle 112 along the longitudinal axis A. The actuator end 114 of the pintle includes a magnetic armature 118 and a spring 120. The actuator 110 includes a solenoid magnetically coupled to the armature 118. The solenoid of the actuator 110 and the armature 118 are configured so that alternating a magnetic field in the solenoid actuates the pintle 112 to reciprocate at a predetermined frequency between the seated position, shown in Fig. 2, and the open position shown in Fig. 3. The spring 120 provides for reciprocation of the pintle 112 when the magnetic field of the actuator 110 relaxes. A tip member 122 is mounted to the outlet end 108 of the housing 102. The pintle 112 includes an internal inlet passage 113 extending partially therethrough, terminating at a set of one or more radial ports 115 for flow from the inlet 106, through the internal passage 113, around the pintle head 116, to the tip member 122.

With reference now to Fig. 2, the tip member 122 includes an outlet orifice 124 and a pintle seat 126. The pintle seat 126 includes a cylindrical interior surface 128 opposed to the cylindrical surface 142 of the pintle head 116. In the seated position of the pintle 112 shown in Fig. 2, the pintle head 116 seals against the pintle seat 126 blocking flow from the inlet 106 of the housing 102 to the outlet orifice 124-by way of external conical surface 144 contacting opposing internal conical surface 134 and by load pressure from spring 120 (Fig. 1) whereby the conical surfaces 134 and 144 remain in contact while actuator 110 (Fig. 1) is relaxed. In an open position of the pintle 112 shown in Fig. 3, the pintle head 116 is spaced apart from the pintle seat 126, opening a flow path through the outlet orifice 124 as indicated by the outlet arrows in Fig. 3.

The pintle head 116 includes a swirl passage, namely swirl slot 132 therein. The swirl slot 132 is angled tangential relative to the longitudinal axis A to induce swirl (rotation around the longitudinal axis A) on flow passing between the pintle head 116 and the pintle seat 126 in the open position. In the seated position shown in Fig. 2, fluid in the swirl slot 132 is confined therein but is also in fluid communication with fluid upstream of the cylindrical interior surface 128 to reduce crystallization of fluids within the swirl slot 132 in the no flow condition. A conical interior surface 134 of the pintle seat 126 blocks the outlet 136 of the swirl slot 132 in the seated position of Fig. 2.

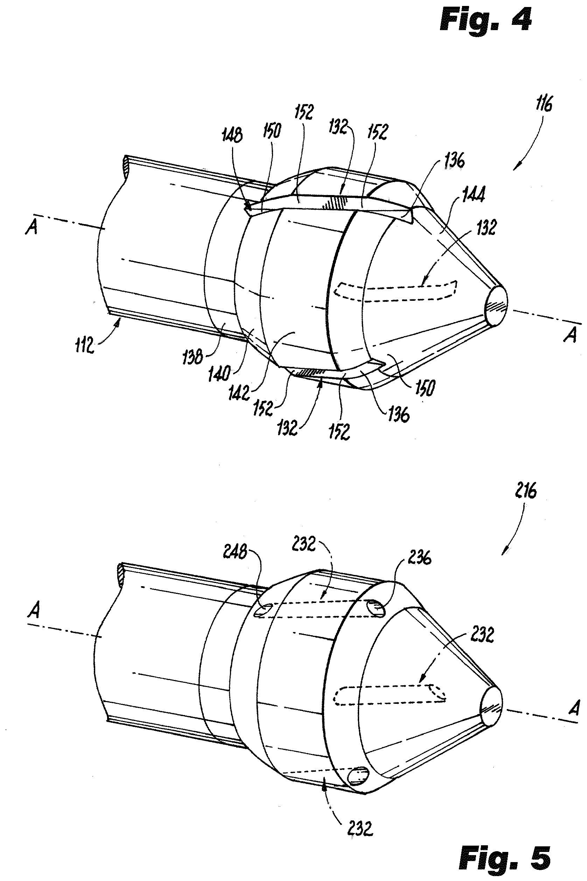

The pintle 112 includes a neck 138 separating a shoulder 140 of the pintle 112 from the pintle head 116. In Figs. 2-3, the neck 138 is shown as being narrower than the shoulder 140 and the pintle head 116, however, the shoulder 140 and neck 138 can be of the same diameter as shown in Fig. 4. The pintle head 116 includes a widening surface 140¹ extending away from the neck 138, a cylindrical surface 142 extending axially from the widening surface 140¹, and a narrowing surface 144 that extends from the cylindrical surface 142 to the tip 146 of the pintle 112. The swirl slot 132 has an outlet end, e.g., at the outlet 136, defined in the narrowing surface 144 of the pintle head 116. The swirl slot 132 has an inlet 148 in the widening surface 140 of the pintle head 116, as shown in Fig. 4.

With continued reference to Fig. 4, the swirl slot 132 defines an open channel on an exterior surface, e.g. the exterior surface that includes surfaces 140, 142, and 144, of the pintle head 116. The open channel defines a flat bottom surface 150 and two opposed sidewalls 152 extending from the flat bottom surface 150. The injector includes three identical swirl slots 132 defined in the pintle head 116, wherein the swirl slots 132 are circumferentially spaced apart evenly around the pintle head 116. Those skilled in the art will readily appreciate that any suitable number of swirl slots can be included without departing from the scope of this disclosure. As shown in Fig. 5, it is also contemplated that the swirl passages can be swirl holes 232 that each define an internal passage through an interior portion of the pintle head 216, from an inlet 248 on an exterior surface of the pintle head 216, to an outlet 236 on the exterior surface of the pintle head 216, which is otherwise similar to pintle head 116 of Fig. 4. Those skilled in the art will readily appreciate that any suitable swirl hole 232 passage shape i.e. a cylindrical (drilled or electrical discharge machined (EDM)) can be used without departing from the scope of this disclosure.

With reference again to Figs. 2 and 3, the only meaningful flow path in the open position of Fig. 2 through the pintle head 116 from the inlet 106 to the outlet orifice 124 is through the swirl slots 132 between the interior cylindrical surface 128 and the pintle head 116 (or through holes 232 in the case of Fig. 5). Forcing the fluid through the tangentially oriented swirl slots 132, or holes 232, in this manner imparts a tangential component on flow in the outlet orifice 124, which adds a swirl to a spray of fluid issuing from the outlet orifice 124, creating a spray field that rotates outwards in a conical pattern. The swirl enhances atomization of the spray, reducing droplet size relative to traditional configurations, and improving performance, e.g., of an selective catalytic reduction (SCR) system. The fluid velocity and size of the outlet orifice 124 determine the droplet size and distribution. Since the fill volume of the swirl slots is small, and is in fluid communication with the inlet 106 even when in the closed position, there is little or no risk of crystallization of stagnant fluid in the swirl slots 132.

The methods and systems of the present disclosure, as described above and shown in the drawings, provide for injectors with superior properties including reduced droplet size compared to traditional configurations. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. An injector member comprising:
a pintle (112) extending along a longitudinal axis from an actuator end to a pintle head (116), wherein the actuator end of the pintle is configured to be operatively connected to an actuator for actuation of the pintle along the longitudinal axis, wherein the pintle head includes a swirl passage (132) therein, wherein the swirl passage is angled tangential relative to the longitudinal axis to induce swirl on flow passing between the pintle head and a pintle seat of an injector.

2. The injector member as recited in claim 1, wherein the swirl passage (132) defines an open channel on an exterior surface of the pintle head.

3. The injector member as recited in claim 2, wherein the open channel defines a flat bottom surface (150) and two opposed sidewalls (152) extending from the flat bottom surface.

4. The injector member as recited in any preceding claim, wherein the swirl passage defines an internal passage through an interior portion of the pintle head, from an inlet on an exterior surface of the pintle head, to an outlet on the exterior surface of the pintle head.

5. The injector member as recited in any preceding claim, wherein the pintle includes a neck (138) separating a shoulder (140) of the pintle from the pintle head, wherein the neck is narrower than the shoulder and the pintle head, wherein the pintle head includes a widening surface (140¹) extending away from the neck, a cylindrical surface (128) extending from the widening surface, and a narrowing surface (144) that extends from the cylindrical surface to a tip of the pintle, wherein the swirl passage has an outlet end defined in the narrowing surface of the pintle head.

6. The injector member as recited in claim 5, wherein the swirl passage has an inlet (148) in the widening surface of the pintle head.

7. The injector member as recited in any preceding claim, further comprising at least one additional swirl passage defined in the pintle head, wherein the swirl passages are circumferentially spaced apart evenly around the pintle head.

8. The injector member as recited in any preceding claim, wherein the actuator end of the pintle includes a magnetic armature, wherein the actuator includes a solenoid magnetically coupled to the armature, and wherein the solenoid and armature are configured so that alternating a magnetic field in the solenoid actuates the pintle to reciprocate at a predetermined frequency between the seated position and the open position.

9. The injector as recited in any preceding claim, wherein the pintle includes an internal inlet passage extending partially therethrough, terminating at a set of one or more radial ports for flow from the internal passage, around the pintle head, to the tip member.

10. An injector comprising:
a housing (102) including a fluid passage (104) extending from an inlet (106) of the housing to an outlet end (108) of the housing;
an actuator (110) mounted to the housing;
an injector member as claimed in any preceding claim, wherein the actuator end of the pintle (112) is operatively connected to the actuator for actuation of the pintle along the longitudinal axis; and
wherein the swirl passage (132) is angled tangential relative to the longitudinal axis to induce swirl on flow passing between the pintle head and the pintle seat in the open position; the injector further comprising
a tip member (122) mounted to the outlet end of the housing, wherein the tip member includes an outlet orifice (126) and a pintle seat (126), wherein in a seated position of the pintle, the pintle head (116) seals against the pintle seat blocking flow to the outlet orifice, and in an open position of the pintle, the pintle head is spaced apart from the pintle seat, opening a flow path through the outlet orifice.

11. The injector as recited in claim 10, wherein the tip member includes a cylindrical interior surface opposed to the cylindrical surface (142) of the pintle head so that in the seated position, fluid in the swirl passage is confined in the swirl passage but in fluid communication with fluid upstream of the cylindrical interior surface.

12. The injector as recited in any preceding claim, wherein a conical interior surface of the pintle seat blocks the swirl passage in the seated position.
